# EUROPEAN PATENT APPLICATION

(11) **EP 2 431 853 A2**
(43) Date of publication of application: **21.03.2012**
(21) Application number: 11180108.0
(22) Date of filing: 06.09.2011
(51) Int. Cl.: G06F 3/048

(54) **Character input device**

(30) Priority: 17.09.2010 JP 2010208844
(71) Applicant: Funai Electric Co., Ltd., Nakagaito Daito-shi Osaka 574-0013 (JP)
(72) Inventor: Tomoda, Takahito, Daito-shi, Osaka 574-0013 (JP)
(74) Representative: Grünecker, Kinkeldey, Stockmair & Schwanhäusser

(57) **Abstract**

This portable telephone (100) includes a display portion (12) displaying a selection screen (1a) displaying selection keys, a touch panel (11) sensing that a thumb or a finger of the user or a touch pen (101) has touched the selection screen and the coordinates of the touched position and a main control portion (71) detecting a contact size of the thumb or the finger of the user or the touch pen touching the selection screen and changing the size of the selection keys in response to the detected contact size.

## Description

### BACKGROUND OF THE INVENTION

### Field of the Invention

The present invention relates to a character input device, and more particularly, it relates to a character input device including a touch panel.

### Description of the Background Art

A character input device including a touch panel is known in general, as disclosed in Japanese Patent Laying-Open No. 2006-85218, for example.

The aforementioned Japanese Patent Laying-Open No. 2006-85218 discloses a touch panel operating device (character input device) including a display portion displaying a selection screen and a touch panel arranged to overlap with a surface side of the display portion for accepting a selecting operation of the user performed on the selection screen with a thumb or a finger or a touch pen. This touch panel operating device is so formed that the user previously sets the area of the thumb or the finger or the touch pen employed for performing the selection operation on the selection screen by touching the touch panel on a set screen or the like. When the thumb or the finger of the user or the touch pen approaches the display portion so that the user touches (selects) any of selection keys such as alphabetic keys displayed on the display portion, the touch panel operating device detects the thumb or the finger of the user or the touch pen with ultrasonic waves emitted from an ultrasonic sensor provided on the display portion thereby detecting that the thumb or the finger of the user or the touch pen is present within a prescribed distance range from the surface of the touch panel. At this time, the touch panel operating device compares the size of the area, previously set on the set screen, of the thumb or the finger of the user or the touch pen touching the touch panel with the size of the area of the selection keys displayed on the display portion. The touch panel operating device is so formed, when the size of the area, previously set on the set screen, of the thumb or the finger of the user or the touch pen touching the touch panel is larger than the size of the area of the selection keys displayed on the display portion, as to enlarge the size of the selection keys displayed on the display portion and as to display the selection keys in the enlarged size.

In the touch panel operating device described in Japanese Patent Laying-Open No. 2006-85218, however, the user must previously set the area of the thumb or the finger or the touch pen touching the touch panel on the set screen while the touch panel operating device enlarges the selection keys to correspond to only the previously set area of the thumb or the finger of the user or the touch pen touching the touch panel after detecting that the thumb or the finger of the user or the touch pen has approached the display portion with the ultrasonic waves emitted from the ultrasonic sensor provided on the display portion, and hence an operation of the user for setting the contact area is complicated due to the necessity for the ultrasonic sensor, a burden on the operation of the user increases, the structure of the touch panel operating device is complicated, and operability of the touch panel operating device for a character input operation is reduced.

### SUMMARY OF THE INVENTION

The present invention has been proposed in order to solve the aforementioned problems, and an object of the present invention is to provide a character input device capable of improving operability for a character input operation while reducing a burden on an operation of the user and simplifying the structure.

A character input device according to an aspect of the present invention includes a display portion displaying a selection screen displaying a plurality of selection keys, a touch panel sensing that a thumb or a finger of the user or a touch panel operation portion has touched the selection screen displayed on the display portion and the coordinates of the touched position, and a control portion detecting a contact size of the thumb or the finger of the user or the touch panel operation portion touching the selection screen and controlling the display portion to change the size of the selection keys displayed on the selection screen in response to the detected contact size and to display the selection keys in the changed size when the user selects the selection keys displayed on the selection screen by touching the selection screen with the thumb or the finger or the touch panel operation portion.

As hereinabove described, the character input device according to the aspect includes the control portion detecting the contact size of the thumb or the finger of the user or the touch panel operation portion touching the selection screen and controlling the display portion to change the size of the selection keys displayed on the selection screen in response to the detected contact size and to display the selection keys in the changed size when the user selects the selection keys displayed on the selection screen by touching the selection screen with the thumb or the finger or the touch panel operation portion, whereby setting of the contact size of the thumb or the finger of the user or the touch panel operation portion touching the selection screen can be so omitted that a burden on an operation of the user can be reduced, dissimilarly to a case where the user previously sets the contact size (area) of the thumb or the finger or the touch panel operation portion touching the selection screen on a set screen or the like. Further, the touch panel is formed to sense that the thumb or the finger of the user or the touch panel operation portion has touched the selection screen so that a selecting operation (contact operation) of the user on the selection screen can be sensed with the existing touch panel, whereby no ultrasonic sensor may be provided but the structure of the character input device can be simplified dissimilarly to a case of detecting that the thumb or the finger of the user or the touch panel operation portion has approached the display portion with ultrasonic waves emitted from an ultrasonic sensor. In addition, the display portion changes the size of the selection keys displayed on the selection screen in response to the detected contact size and displays the selection keys in the changed size so that the display portion changes the size of the selection keys to correspond to the detected contact size and displays the selection keys in the changed size dissimilarly to a case of displaying the selection keys in an enlarged manner to correspond to only a previously set contact area of a thumb or a finger of the user or a touch pen, for example, whereby operability of the character input device for a character input operation can be improved.

In the aforementioned character input device according to the aspect, the control portion is preferably formed to control the display portion to display the selection keys displayed on the selection screen in a first size corresponding to a first contact size when detecting that the contact size of the thumb or the finger of the user or the touch panel operation portion touching the selection screen is the first contact size or to display the selection keys displayed on the selection screen in a second size, corresponding to a second contact size, smaller than the first size when detecting that the contact size of the thumb or the finger of the user or the touch panel operation portion touching the selection screen is the second contact size smaller than the first contact size. According to this structure, the control portion controls the display portion to reduce the size of the selection keys displayed on the selection screen from the first size to the second size and to display the selection keys in the second size when the contact size of the thumb or the finger of the user or the touch panel operation portion touching the selection screen is reduced from the first contact size to the second contact size, whereby the selection screen can display a large number of selection keys. Further, the control portion controls the display portion to change the size (first or second size) of the selection keys displayed on the selection screen in response to the detected contact size (first or second contact size) and to display the selection keys in the changed size so that the user can easily select the selection keys displayed on the display portion, whereby the operability of the character input device for the character input operation can be improved.

In this case, the control portion is preferably formed to control the display portion to display the selection keys displayed on the selection screen in a third size, corresponding to a third contact size, smaller than the first size and larger than the second size when detecting that the contact size of the thumb or the finger of the user or the touch panel operation portion touching the selection screen is the third contact size smaller than the first contact size and larger than the second contact size. According to this structure, the display portion can change the size of the selection keys displayed on the selection screen to any of three stages of the first, second and third sizes in response to the detected contact size, whereby the user can more easily select the selection keys displayed on the display portion, and the operability of the character input device for the character input operation with the thumb or the finger of the user or the touch panel operation portion having a different contact size can be further improved.

In the aforementioned structure of displaying the selection keys in the third size when detecting that the contact size is the third contact size, the control portion preferably controls the display portion to display the selection keys in any size, corresponding to either the thumb or the finger of the user or the touch panel operation portion selecting the selection keys, among the first size, the second size and the third size when the user selects the selection keys with either the thumb or the finger or the touch panel operation portion or to display the selection keys in any two sizes, corresponding to both of the thumb or the finger of the user and the touch panel operation portion selecting the selection keys, among the first size, the second size and the third size when the user selects the selection keys with both of a thumb or a finger and the touch panel operation portion. According to this structure, the display portion can display the selection keys in two different sizes in response to contact sizes when the user selects the selection keys with both of a thumb or a finger and the touch panel operation portion, whereby the operability of the character input device for the character input operation can be further improved.

In the aforementioned character input device according to the aspect, the control portion is preferably formed to control the display portion to maintain the state of changing the size of the selection keys displayed on the selection screen in response to the contact size of the thumb or the finger of the user or the touch panel operation portion touching the selection screen also in a state where the user separates the thumb or the finger or the touch panel operation portion from the selection screen after selecting the selection keys displayed on the selection screen by touching the selection screen with the thumb or the finger or the touch panel operation portion. According to this structure, the size of the selection keys displayed on the selection screen remains unchanged also when the user separates the thumb or the finger or the touch panel operation portion from the selection screen dissimilarly to a case where the size of the selection keys displayed on the selection screen returns to that before the selection by the user, whereby visibility of the selection keys displayed on the selection screen can be improved.

In this case, the control portion is preferably formed to control the display portion to maintain the state of changing the size of the selection keys displayed on the selection screen in response to the contact size of the thumb or the finger of the user or the touch panel operation portion touching the selection screen until the user selects the selection keys displayed on the selection screen after selecting the selection keys displayed on the selection screen. According to this structure, the size of the selection keys displayed on the selection screen remains unchanged until the user selects the selection keys displayed on the selection screen after selecting the selection keys displayed on the selection screen, whereby visibility of the subsequently selected selection keys can be improved.

In the aforementioned character input device according to the aspect, the selection screen preferably includes a first display region and a second display region displaying the plurality of selection keys, and the control portion is preferably so formed, when the contact size of the thumb or the finger of the user or the touch panel operation portion touching the first display region and the contact size of the thumb or the finger of the user or the touch panel operation portion touching the second display region are different from each other, as to control the display portion to display the selection keys displayed on the first display region and the selection keys displayed on the second display region in different sizes to correspond to the contact sizes of the thumb or the finger of the user or the touch panel operation portion touching the first and second display regions respectively. According to this structure, the operability of the character input device in a case where the user selects the selection keys displayed on the selection screen with both of a thumb or a finger and the touch panel operation portion, which are different in size from each other, can be improved by increasing the size of the selection keys on the first display region operated by a thumb or a finger of the user having a relatively large size and reducing the size of the selection keys of the second display region operated by the touch panel operation portion having a relatively small size, for example.

In this case, the character input device is preferably so formed that the first display region is arranged on a first side of a device body held by the user on the selection screen and the second display region is arranged on a second side of the device body opposite to the first side held by the user on the selection screen. According to this structure, the sizes of the selection keys can be rendered different from each other on the first side held by the user and the second side opposite to the first side, whereby the user can easily select the selection keys with either hand also when the contact sizes of the hand of the user holding the device body and the hand opposite thereto are different from each other.

The aforementioned character input device according to the aspect preferably further includes a direction detection portion detecting the state of arrangement of the display portion in the vertical direction or the horizontal direction, and the control portion is preferably formed to control the display portion to change the size of the selection keys displayed on the selection screen in response to the contact size of the thumb or the finger of the user or the touch panel operation portion touching the selection screen to correspond to the state of arrangement of the display portion in the vertical direction or the horizontal direction on the basis of the state of arrangement of the display portion in the vertical direction or the horizontal direction detected by the direction detection portion. According to this structure, the control portion can control the display portion to change the size of the selection keys to correspond to the state of arrangement thereof and to display the selection keys in the changed size whether the display portion is arranged in the vertical direction or the horizontal direction.

In this case, the control portion is preferably formed to control the display portion to display the selection keys vertically along the longitudinal direction of the selection screen when the display portion is arranged in the vertical direction or to control the display portion to display the selection keys vertically along the short-side direction of the selection screen when the display portion is arranged in the horizontal direction. According to this structure, the selection screen can display the selection keys in a state suitable to the direction of the arrangement of the display portion whether the display portion is arranged in the vertical direction or the horizontal direction, whereby the operability of the character input device can be further improved when the user selects the selection keys displayed on the selection screen.

The aforementioned character input device according to the aspect preferably further includes a holding detection portion detecting a region of a device body held by the user, and the control portion is preferably formed to control the display portion to change the size of the selection keys displayed in the vicinity of the region of the device body held by the user on the selection screen in response to the contact size of a thumb or a finger of the user holding the device body and touching the selection screen and to display the selection keys in the changed size in a portion of the selection screen in the vicinity of the region of the device body held by the user and detected by the holding detection portion. According to this structure, the display portion changes the size of the selection keys displayed in the portion of the selection screen in the vicinity of the region of the device body held by the user in response to the contact size of a thumb or a finger of the user touching the selection screen and displays the selection keys in the changed size, whereby the operability of the character input device can be improved when the user selects the selection keys displayed on the selection screen with a thumb or a finger holding the device body.

The aforementioned character input device according to the aspect preferably further includes a holding detection portion detecting a region of a device body held by the user, and the control portion is preferably formed to determine whether or not the layout of the selection screen of the device body is suitable to the region held by the user when the holding detection portion detects the region of the device body held by the user and to change the layout of the selection screen to a layout suitable to the region held by the user and detected by the holding detection portion when determining that the layout of the selection screen of the device body is unsuitable to the region held by the user. According to this structure, the control portion changes the layout of the selection screen to that suitable to the region held by the user in response to the state of the selection screen held by the user, whereby the operability of the character input device can be further improved for the user.

In this case, the control portion preferably determines whether or not the layout of the selection screen of the device body is suitable to the region held by the user when the holding detection portion detects the region of the device body held by the user and does not change the layout of the selection screen when determining that the layout of the selection screen of the device body is suitable to the region held by the user. According to this structure, the control portion can be prevented from changing the layout of the selection screen if the same is suitable to the region held by the user.

In the aforementioned character input device further including the holding detection portion detecting the region of the device body held by the user, a plurality of the holding detection portions are preferably provided on different positions of the device body, and provided at least in the vicinity of an end portion of the device body on the side of the longitudinal direction and in the vicinity of an end portion on the side of the short-side direction. According to this structure, any of the holding detection portions provided in the vicinity of the end portion of the device body on the side of the longitudinal direction and in the vicinity of the end portion on the side of the short-side direction can easily detect the region held by the user even if the user vertically or horizontally changes the direction of the device body.

In the aforementioned character input device according to the aspect, the control portion is preferably formed to detect the contact size every selecting operation of the user on the selection screen and to control the display portion to change the size of the selection keys displayed on the selection screen in response to the detected contact size and to display the selection keys in the changed size. According to this structure, the control portion can reliably control the display portion to change the size of the selection keys displayed on the selection screen in response to respective contact sizes and to display the selection keys in changed sizes even if the user continuously selects the selection keys with different contact sizes.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows a selection screen displayed on a display portion of a portable telephone according to an embodiment of the present invention;
Fig. 2 illustrates a state where the user operates the selection screen displayed on the display portion of the portable telephone according to the embodiment of the present invention with the thumb of his/her left hand and a touch pen held by his/her right hand;
Fig. 3 is a block diagram showing the structure of the portable telephone according to the embodiment of the present invention;
Fig. 4 is a flow chart for illustrating a control operation of a control portion of the portable telephone according to the embodiment of the present invention;
Fig. 5 is a diagram for illustrating a state where the user operates a selection screen displayed on a display portion of a portable telephone according to a first modification of the embodiment of the present invention with the thumb of his/her left hand and the forefinger of his/her right hand;
Fig. 6 is a diagram for illustrating a state where the user operates a selection screen displayed on a display portion of a portable telephone according to a second modification of the embodiment of the present invention with the thumb of his/her left hand and a touch pen held by his/her right hand;
Fig. 7 is a diagram for illustrating a state where the user operates a selection screen displayed on a display portion of a portable telephone according to a third modification of the embodiment of the present invention with a touch pen held by his/her right hand; and
Fig. 8 is a diagram for illustrating a state where the user operates a selection screen displayed on a display portion of a portable telephone according to a fourth modification of the embodiment of the present invention with the thumbs of both of his/her hands.

### DESCRIPTION OF THE PREFERRED EMBODIMENTS

An embodiment of the present invention is now described with reference to the drawings.

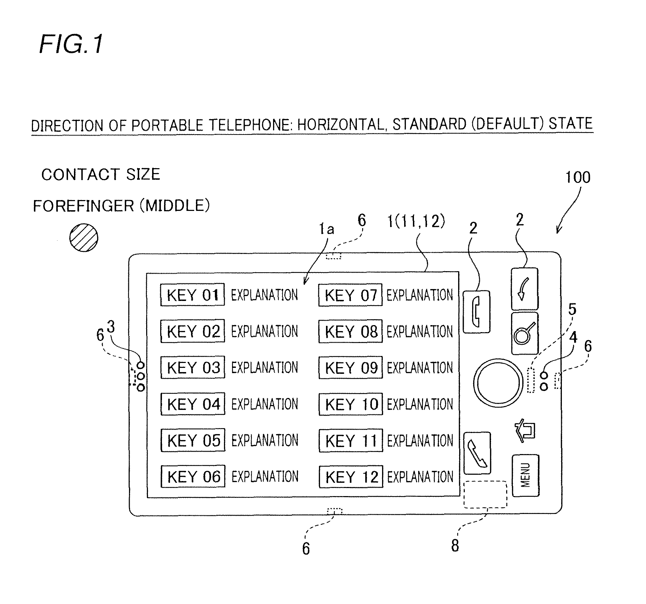

The structure of a portable telephone 100 according to the embodiment of the present invention is described with reference to Figs. 1 to 3. The portable telephone 100 is an example of the "character input device" in the present invention.

The portable telephone 100 according to the embodiment of the present invention includes a touch panel portion 1, a plurality of operation buttons 2 for allowing the user to operate a telephone body in various ways, a speaker 3 outputting sounds and a microphone 4 for picking up sounds, as shown in Fig. 1. The portable telephone 100 further includes an acceleration sensor 5 for detecting the state of arrangement of the portable telephone 100 in the vertical direction or the horizontal direction and four proximity sensors 6 for detecting regions of the portable telephone 100 held by the user. More specifically, the four proximity sensors 6 are provided one by one in the vicinity of both end portions of the telephone body in the longitudinal direction and in the vicinity of both end portions of the telephone body in the short-side direction in plan view. The portable telephone 100 further includes a telephone call portion 8 having a telephone call function. The acceleration sensor 5 is an example of the "direction detection portion" in the present invention,
and the proximity sensors 6 are examples of the "holding detection portion" in the present invention.

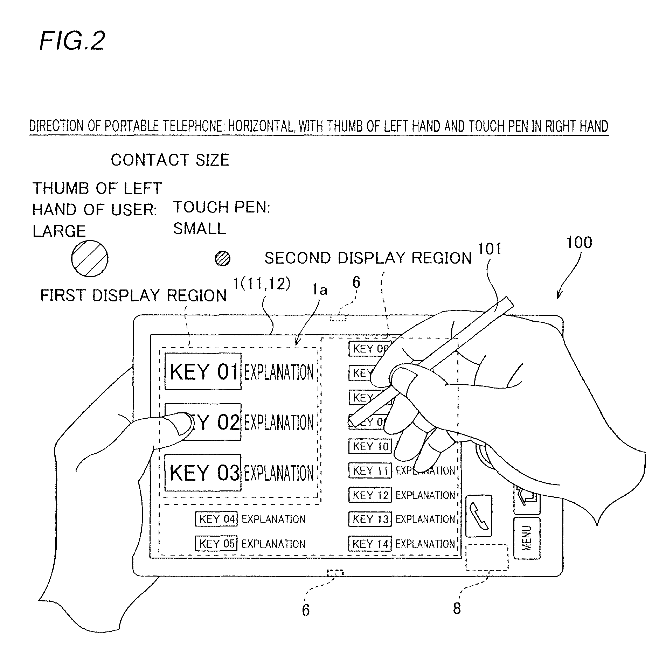

The touch panel portion 1 includes a touch panel 11 accepting contents input with a thumb or a finger of the user or a touch pen 101 (see Fig. 2) and a display portion 12, arranged on the side of the lower surface of the touch panel 11, formed by a liquid crystal panel or the like.

The touch pen 101 is an example of the "touch panel operation portion" in the present invention. The touch panel 11 is formed by a resistive film-type touch panel detecting an input operation by change in resistance or a capacitance-type touch panel detecting an input operation by change in capacitance. The touch panel 11 is formed to detect the coordinates of a position, touched by the thumb or the finger of the user or the touch pen 101, of a selection screen 1a displayed on the display portion 12.

The display portion 12 is formed to display the selection screen 1a displaying a plurality of selection keys such as "key 01 explanation", "key 02 explanation", ... and a plurality of explanations related to the selection keys. Further, the display portion 12 is formed to display the selection keys on the selection screen 1a in a size responsive to a contact size (middle) of a forefinger of the user touching the selection screen 1a, for example, in a standard (default) state immediately after the user turns on the portable telephone 100 or before the user operates the selection screen 1a.

According to this embodiment, the selection keys of the selection screen 1a are so formed that the contact size of the thumb or the finger of the user or the touch pen 101 touching the selection screen 1a is detected and the size of the selection keys displayed on the selection screen 1a is varied with the detected contact size when the user selects the selection keys displayed on the selection screen 1a by touching the selection screen 1a with the thumb or the finger or the touch pen 101.

When the user selects selection keys displayed on a first display region of the selection screen 1a by touching the first display region of the selection screen 1a with the thumb of his/her left hand as shown in Fig. 2, for example, the contact size of the thumb of the left hand of the user touching the selection screen 1a is detected, and the size of the selection keys displayed on the first display region of the selection screen 1a is increased as compared with that in the standard state in response to the detected contact size (large). When the user selects selection keys displayed on a second display region of the selection screen 1a by touching the second display region of the selection screen 1a with the touch pen 101 held by his/her right hand, the contact size of the touch pen 101, held by the right hand of the user, touching the selection screen 1a is detected, and the size of the selection keys displayed on the second display region of the selection screen 1a is reduced as compared with that in the standard state in response to the detected contact size (small). The contact size (large) is an example of the "first contact size" in the present invention, and the contact size (small) is an example of the "second contact size" in the present invention. The contact size (middle) is an example of the "third contact size" in the present invention.

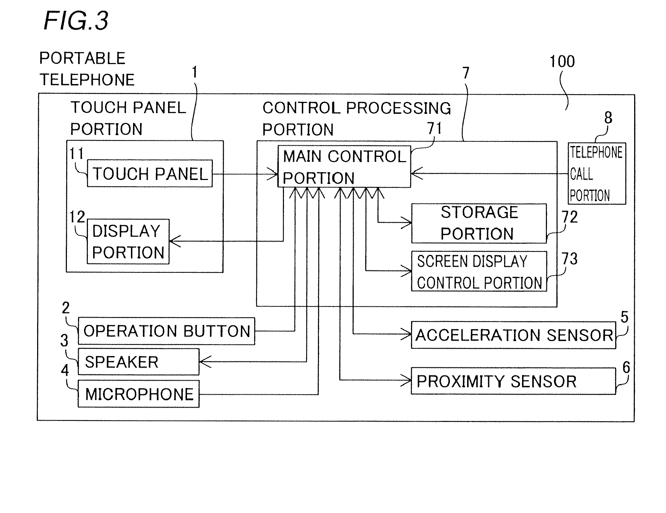

As shown in Fig. 3, the portable telephone 100 further includes a control processing portion 7. The control processing portion 7 includes a main control portion 71, a storage portion 72 and a screen display control portion 73. The main control portion 71 has a function of controlling the overall portable telephone 100 The storage portion 72 has a function of storing information about the selection screen 1a, information about the sizes of the selection keys corresponding to the contact sizes of the thumbs and fingers of the user and the touch pen 101 touching the selection screen 1a, and the like. The screen display control portion 73 has a function of controlling methods of displaying the selection screen 1a, the selection keys and the like. The main control portion 71 is an example of the "control portion" in the present invention.

The main control portion 71 is formed to receive an input signal from the touch panel 11 when the user selects the selection keys on the selection screen 1a. Further, the main control portion 71 is formed to transmit the signal received from the touch panel 11 to the screen display control portion 73 and to read information related to the size of the selection keys corresponding to the contact size of the thumb or the finger of the user or the touch pen 101, touching the selection screen 1a, corresponding to the signal from the touch panel 11. In addition, the main control portion 71 is formed to control the display portion 12 to display the selection screen 1a thereon on the basis of signals received from the storage portion 72 and the screen display control portion 73.

When detecting that the contact size of the thumb or the finger of the user or the touch pen 101 touching the selection screen 1a is the contact size (middle) smaller than the contact size (large) and larger than the contact size (small), the main control portion 71 controls the display portion 12 to display the selection keys on the selection screen 1a in the size of the standard state corresponding to the contact size (middle).

When the user selects the selection keys with the thumb or the finger or the touch pen 101, the main control portion 71 controls the display portion 12 to display the selection keys in any size, corresponding to either the thumb or the finger or the touch pen 101 selecting the selection keys, among a size larger than that in the standard state, a size smaller than that in the standard state and the size in the standard state. When the user selects the selection keys with both of a thumb or a finger and the touch pen 101, the main control portion 71 controls the display portion 12 to display the selection keys in any two sizes, corresponding to the contact sizes of both of a thumb or a finger and the touch pen 101, among the size larger than that in the standard state, the size smaller than that in the standard state and the size in the standard state.

The main control portion 71 is so formed, when the user operates any operation button 2, as to receive an input signal based on the operation of the corresponding operation button 2. Further, the main control portion 71 is formed to transmit a signal for outputting sounds to the speaker 3. In addition, the main control portion 71 is formed to receive a signal from the microphone 4.

The main control portion 71 is formed to receive a signal about the state of arrangement of the portable telephone 100 in the vertical direction or the horizontal direction detected by the acceleration sensor 5. Further, the main control portion 71 is formed to control the display portion 12 to change the size of the selection keys to correspond to the state of arrangement of the portable telephone 100 in the vertical direction or the horizontal direction on the basis of the result of the state of arrangement of the portable telephone 100 detected by the acceleration sensor 5 and to display the selection keys in the changed size. In addition, the main control portion 71 is formed to control the display portion 12 to display the selection keys vertically along the longitudinal direction of the selection screen 1a when the display portion 12 is arranged in the vertical direction, or to display the selection keys vertically along the short-side direction of the selection screen 1a when the display portion 12 is arranged in the horizontal direction.

The main control portion 71 is formed to receive a signal about the region, held by the user, of the portable telephone 100 detected by the corresponding one of the proximity sensors 6. Further, the main control portion 71 is formed to control the display portion 12 to change the size of the selection keys displayed on the first display region of the selection screen 1a in response to the contact size of the thumb of the left hand of the user touching the selection screen 1a on the first display region thereof in the vicinity of the region held by the left hand of the user on the basis of the result detected by the corresponding proximity sensor 6, as shown in Fig. 2. The selection screen 1a is so formed that the first display region is arranged on a first side of the telephone body held by the user and the second display portion is arranged on a second side of the telephone body held by the user.

A control operation of the main control portion 71 controlling the display portion 12 to change the size of the selection keys in response to the contact size of the thumb or the finger of the user or the touch pen 101 touching the selection screen 1a and to display the selection keys in the changed size is now described with reference to Figs. 1, 2 and 4.

In this embodiment, it is assumed that the user selects the selection keys displayed on the first display region of the selection screen 1a with the thumb of his/her left hand while holding the left side of the portable telephone 100 with his/her left hand and selects the selection keys displayed on the second display region of the selection screen 1a with the touch pen 101 held by his/her right hand.

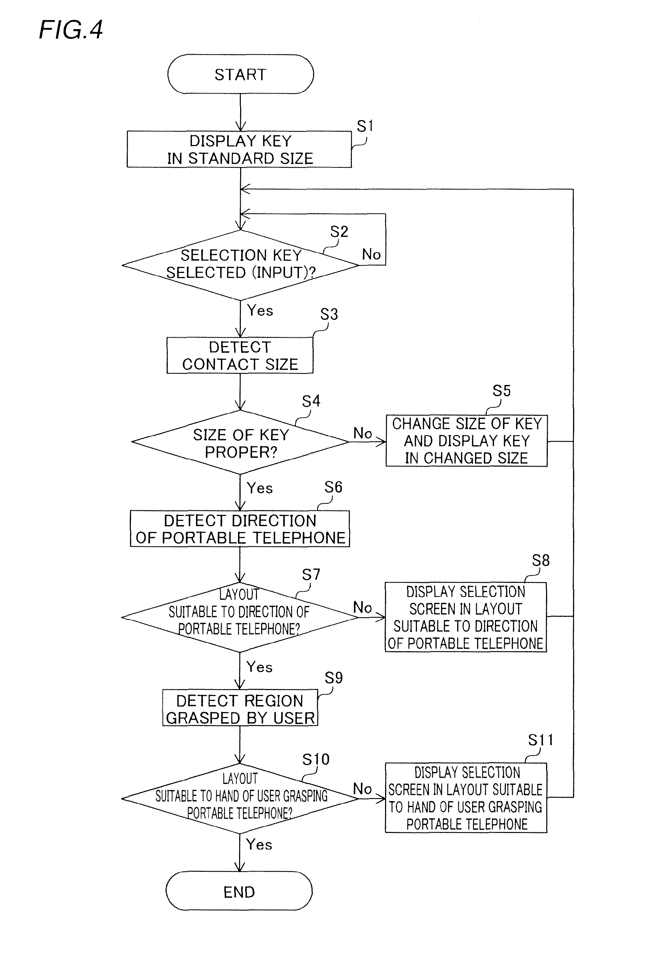

First, the main control portion 71 controls the display portion 12 to display the selection screen 1a displaying the selection keys in the size in the standard (default) state at a step S1, as shown in Fig. 4. In other words, the display portion 12 displays the selection keys in the size responsive to the contact size (middle) of the forefinger of the right hand of the user touching the selection screen 1a, as shown in Fig. 1. Then, the main control portion 71 advances to a step S2.

Then, the main control portion 71 determines whether or not the user has selected the selection keys on the selection screen 1a at the step S2, as shown in Fig. 4. If determining that the user has not yet selected the selection keys on the selection screen 1a at the step S2, the main control portion 71 repeats this determination until the user selects the selection keys on the selection screen 1a. If determining that the user has selected the selection keys on the selection screen 1a at the step S2, on the other hand, the main control portion 71 advances to a step S3.

When the user touches the selection screen 1a with the thumb of his/her left hand, for example, the main control portion 71 detects the contact size of the thumb of the left hand of the user touching the selection screen 1a at the step S3. Then, the main control portion 71 advances to a step S4. Then, the main control portion 71 determines whether or not the size of the selection keys on the currently displayed selection screen 1a corresponds to the detected contact size at the step S4.

If determining that the size of the selection keys on the currently displayed selection screen 1a does not correspond to the detected contact size at the step S4, the main control portion 71 advances to a step S5. Then, the main control portion 71 controls the display portion 12 to change the size of the selection keys to correspond to the detected contact size and to display the same in the changed size at the step S5. In other words, the user selects the selection keys on the selection screen 1a with the thumb of his/her left hand on the first display region of the selection screen 1a as shown in Fig. 2, and hence the display portion 12 changes the size of the selection keys from that responsive to the contact size (middle) (see Fig. 1) to that responsive to the contact size (large) (see Fig. 2) and displays the same in the changed size. Thereafter the main control portion 71 returns to the step S2. Even if the user separates the thumb of his/her left hand from the selection screen 1a after selecting the selection keys by touching the selection screen 1a with the thumb of his/her left hand, the selection keys displayed on the selection screen 1a are kept in the size responsive to the contact size (large) of the thumb of the left hand of the user having touched the selection screen 1a. The display portion 12 maintains the state of changing the size of the selection keys displayed on the selection screen 1a in response to the contact size of the thumb or the finger of the user or the touch pen 101 touching the selection screen 1a until the user selects the selection keys displayed on the selection screen 1a after selecting the selection keys displayed on the selection screen 1a**.**

If determining that the user has selected the selection keys on the selection screen 1a at the step S2, on the other hand, the main control portion 71 advances to the step S3. When the user touches the selection screen 1a with the touch pen 101 held by his/her right hand, for example, the main control portion 71 detects the contact size of the touch pen 101 touching the selection screen 1a at the step S3. Then, the main control portion 71 advances to the step S4. Then, the main control portion 71 determines whether or not the size of the selection keys on the currently displayed selection screen 1a corresponds to the detected contact size at the step S4.

If determining that the size of the selection keys on the currently displayed selection screen 1a does not correspond to the detected contact size at the step S4, the main control portion 71 advances to the step S5. Then, the main control portion 71 controls the display portion 12 to change the size of the selection keys to correspond to the detected contact size and to display the same in the changed size at the step S5. In other words, the user selects the selection keys on the selection screen 1a with the touch pen 101 on the second display region of the selection screen 1a as shown in Fig. 2, and hence the display portion 12 changes the size of the selection keys from that responsive to the contact size (middle) (see Fig. 1) to that responsive to the contact size (small) (see Fig. 2) and displays the same in the changed size. Thereafter the main control portion 71 returns to the step S2.

The main control portion 71 detects the contact size at the step S3 every time the user selects the selection keys on the selection screen 1a. If the size of the contact area of the object (the thumb or the finger of the user or the touch pen 100) employed for selecting the selection keys changes every time, therefore, the main control portion 71 controls the display portion 12 to change the size of the selection keys displayed on the selection screen 1a every time at the step S5.

If determining that the size of the selection keys displayed on the selection screen 1a corresponds to the detected contact size at the step S4, the main control portion 71 advances to a step S6. Then, the main control portion 71 controls the acceleration sensor 5 to detect the state of arrangement of the portable telephone 100 in the vertical direction or the horizontal direction at the step S6, and advances to a step S7.

Then, the main control portion 71 determines whether or not the layout of the selection screen 1a is suitable to the direction of the portable telephone 100 (whether or not the display direction of the selection screen 1a is proper) at the step S7. If determining that the layout of the selection screen 1a is unsuitable to the direction of the portable telephone 100 (the display direction of the selection screen 1a is improper) at the step S7, the main control portion 71 advances to a step S8. Then, the main control portion 71 controls the display portion 12 to change the layout of the selection screen 1a to that suitable to the direction of the portable telephone 100 and to display the selection screen 1a in the changed layout at the step S8. More specifically, if the display portion 12 displays the selection screen 1a in the vertical direction when the portable telephone 100 is arranged in the horizontal direction, the main control portion 71 controls the display portion 12 to change the layout for displaying the selection screen 1a in the horizontal direction. Thereafter the main control portion 71 returns to the step S2.

If determining that the layout of the currently displayed selection screen 1a is suitable to the direction of the portable telephone 100 at the step S7, on the other hand, the main control portion 71 advances to a step S9. Then, the main control portion 71 controls the corresponding proximity sensor 6 to detect the region of the portable telephone 100 held by the user at the step S9, and advances to a step S10.

Then, the main control portion 71 determines whether or not the layout of the selection keys displayed on the selection screen 1a is suitable to the hand of the user holding the portable telephone 100 at the step S10. For example, the main control portion 71 determines whether or not the display portion 12 displays the selection keys on the first display region of the selection screen 1a in the vicinity of the region, detected by the corresponding proximity sensor 6, of the portable telephone 100 held by the left hand of the user in the size responsive to the contact size of the thumb of the left hand of the user touching the selection screen 1a, as shown in Fig. 2. In other words, the main control portion 71 determines whether or not the display portion 12 displays the selection keys in the range (first display region) of the selection screen 1a reachable by the thumb of the left hand of the user in a proper size.

If determining that the layout of the selection keys displayed on the currently displayed selection screen 1a is unsuitable to the hand of the user holding the portable telephone 100 at the step S10, the main control portion 71 advances to a step S11. When the user so changes the position of the portable telephone 100 held by him/her that the first display region of the selection screen 1a in the vicinity of the region of the portable telephone 100 held by the left hand of the user does not display the selection keys in the size responsive to the contact size of the thumb of the left hand of the user touching the selection screen 1a, the main control portion 71 determines that the layout of the selection keys is unsuitable to the hand of the user holding the portable telephone 100.

Then, the main control portion 71 controls the display portion 12 to change the layout to that suitable to the hand of the user holding the portable telephone 100 at the step S11. That is, the main control portion 71 controls the display portion 12 to display the selection keys in the size responsive to the contact size of the thumb of the left hand of the user touching the selection screen 1a on the first display region of the selection screen 1a in the vicinity of the region, held by the left hand of the user, of the portable telephone 100 after the user has changed the position holding the portable telephone 100. In other words, the main control portion 71 controls the display portion 12 to change the layout of the selection keys on the selection screen 1a to that suitable to the region, detected by the corresponding proximity sensor 6, of the portable telephone 100 held by the user at the step S11. Thereafter the main control portion 71 returns to the step S2.

If determining that the layout of the selection keys displayed on the selection screen 1a of the telephone body is that suitable to the region of the portable telephone 100 held by the user at the step S10, the main control portion 71 does not control the display portion 12 to change the layout of the selection keys on the selection screen 1a.

According to this embodiment, as hereinabove described, the portable telephone 100 includes the main control portion 71 detecting the contact size of the thumb or the finger of the user or the touch pen 101 touching the selection screen 1a when the user selects the selection keys displayed on the selection screen 1a by touching the selection screen 1a with the thumb or the finger or the touch pen 101 and controlling the display portion 12 to change the size of the selection keys displayed on the selection screen 1a in response to the detected contact size and to display the selection keys in the changed size, whereby setting of the contact size of the thumb or the finger of the user or the touch pen 101 touching the selection screen 1a can be so omitted that an operation burden on the user can be reduced as compared with a case of previously setting the contact size (area) of the thumb or the finger of the user or the touch pen 101 touching the selection screen 1a on a set screen or the like. The touch panel 11 is formed to detect that the user has touched the selection screen 1a with the thumb or the finger or the touch pen 101 so that the operation of the user selecting (touching) the selection screen 1a can be detected with the existing touch panel 11, whereby no ultrasonic sensor may be provided but the structure of the portable telephone 100 can be simplified dissimilarly to a case of detecting that the thumb or the finger of the user or the touch pen 101 has approached the display portion 12 with ultrasonic waves emitted from an ultrasonic sensor. Further, the main control portion 71 controls the display portion 12 to change the size of the selection keys displayed on the selection screen 1a in response to the detected contact size and to display the selection keys in the changed size so that the selection screen 1a displays the selection keys in the size changed to correspond to the detected contact size dissimilarly to a case of displaying the selection keys in an enlarged manner to correspond to only a previously set contact area of the thumb or the finger of the user or the touch pen 101, for example, whereby operability of the portable telephone 100 for a character input operation can be improved.

According to this embodiment, as hereinabove described, the selection screen 1a displays the selection keys in a first size corresponding to a first contact size if the main control portion 71 detects that the contact size of the thumb or the finger of the user or the touch pen 101 touching the selection screen 1a is the first contact size, and displays the selection keys in a second size, smaller than the first size, corresponding to a second contact size the main control portion 71 detects that the contact size of the thumb or the finger of the user or the touch pen 101 touching the selection screen 1a is the second contact size smaller than the first contact size. When the contact size of the thumb or the finger of the user or the touch pen 101 touching the selection screen 1a is changed from the first contact size to the second contact size, therefore, the display portion 12 changes the size of the selection keys displayed on the selection screen 1a from the first size to the second size and displays the selection keys in the second size, whereby the selection screen 1a can display a large number of keys. Further, the display portion 12 so changes the size (first or second size) of the selection keys displayed on the selection screen 1a in response to the detected contact size (first or second contact size) and displays the same in the changed size that the user can easily select/operate the selection keys displayed on the display portion 12, whereby the operability of the portable telephone 100 for the character input operation can be improved.

According to this embodiment, as hereinabove described, the main control portion 71 is so formed, when detecting that the contact size of the thumb or the finger of the user or the touch pen 101 touching the selection screen 1a is the contact size (middle) smaller than the contact size (large) and larger than the contact size (small), as to control the display portion 12 to display the selection keys in the size responsive to the contact size (middle) so that the display portion 12 can change the size of the selection keys displayed on the selection screen 1a to any of the three stages of sizes, i.e., the size larger than that in the standard state, the size smaller than that in the standard state and the size in the standard state in response to the detected contact size, whereby the user can more easily select/operate the selection keys, and the operability of the portable telephone 100 for the character input operation with the thumb or the finger of the user or the touch pen 101 having a different contact size can be more improved.

According to this embodiment, as hereinabove described, the main control portion 71 is formed to control the display portion 12 to display the selection keys in any one of the size larger than that in the standard state, the size smaller than that in the standard state and the size in the standard state when the user selects the selection keys with either the thumb or the finger or the touch pen 101 or to display the selection keys in any two of the size larger than that in the standard state, the size smaller than that in the standard state and the size in the standard state when the user selects the selection keys with both of a thumb or a finger and the touch pen 101 so that the display portion 12 can display the selection keys in two different sizes in response to contact sizes also when the user selects the selection keys with both of a thumb or a finger and the touch pen 101, whereby the operability of the portable telephone 100 for the character input operation can be further improved.

According to this embodiment, as hereinabove described, the display portion 12 maintains the state of changing the size of the selection keys displayed on the selection screen 1a in response to the contact size of the thumb or the finger of the user or the touch pen 101 touching the selection screen 1a even if the user separates the thumb or the finger or the touch pen 101 from the selection screen 1a after selecting the selection keys displayed on the selection screen 1a by touching the selection screen 1a with the thumb or the finger or the touch pen 101. Thus, the size of the selection keys displayed on the selection screen 1a remains unchanged also when the user separates the thumb or the finger or the touch pen 101 from the selection screen 1a dissimilarly to a case where the size of the selection keys displayed on the selection screen 1a returns to that before the selection by the user, whereby visibility of the selection keys displayed on the selection screen 1a can be improved.

According to this embodiment, as hereinabove described, the main control portion 71 is formed to control the display portion 12 to maintain the state of changing the size of the selection keys displayed on the selection screen 1a in response to the contact size of the thumb or the finger of the user or the touch pen 101 touching the selection screen 1a until the user selects the selection keys displayed on the selection screen 1a after selecting the selection keys displayed on the selection screen 1a so that the size of the selection keys displayed on the selection screen 1a remains unchanged until the user selects the selection keys displayed on the selection screen 1a after selecting the selection keys displayed on the selection screen 1a, whereby visibility of subsequently selected selection keys can be improved.

According to this embodiment, as hereinabove described, the display portion 12 displays the selection keys on the first and second display regions in sizes different from each other to correspond to the contact sizes on the first and second display regions respectively when the contact size of a thumb or a finger of the user touching the first display region and the contact size of the touch pen 101 touching the second display region are different from each other. Thus, the operability of the portable telephone 100 can be improved when the user selects the selection keys displayed on the selection screen 1a with both of a thumb or a finger and the touch pen 101, having sizes different from each other, by increasing the size of the selection keys on the first display region operated by a thumb or a finger of the user having a relatively large size and reducing the size of the selection keys on the second display region operated by the touch pen 101 having a relatively small size.

According to this embodiment, as hereinabove described, the first display region is arranged on the first side of the telephone body held by the user on the selection screen 1a and the second display region is arranged on the second side opposite to the first side of the telephone body held by the user on the selection screen 1a so that the selection keys can be displayed in different sizes on the first side of the telephone body held by the user and the second side opposite to the first side, whereby the user can easily select the selection keys with either hand also when the contact sizes of a thumb or a finger of one of his/her hands holding the telephone body and the touch pen 101 held by the other hand of the user are different from each other.

According to this embodiment, as hereinabove described, the display portion 12 changes the size of the selection keys displayed on the selection screen 1a in response to the contact size of the thumb or the finger of the user or the touch pen 101 touching the selection screen 1a to correspond to the state of arrangement of the display portion 12 in the vertical direction or the horizontal direction detected by the acceleration sensor 5 and displays the selection keys in the changed size. Thus, the display portion 12 can change the size of the selection keys in response to the state of arrangement of the display portion 12 to display the selection keys in the changed size whether the display portion 12 is arranged in the vertical direction or the horizontal direction.

According to this embodiment, as hereinabove described, the main control portion 71 is formed to control the display portion 12 to display the selection keys vertically along the longitudinal direction of the selection screen 1a when the display portion 12 is arranged in the vertical direction or to display the selection keys vertically along the short-side direction of the selection screen 1a when the display portion 12 is arranged in the horizontal direction so that the display portion 12 can display the selection keys in a state suitable to the direction of arrangement thereof whether the same is arranged in the vertical direction or the horizontal direction, whereby the operability of the portable telephone 100 for selecting the selection keys can be more improved.

According to this embodiment, as hereinabove described, the display portion 12 changes the size of the selection keys displayed on the selection screen 1a in the vicinity of the region of the portable telephone 100 held by the user in response to the contact size of a thumb or a finger of the user holding the portable telephone 100 and touching the selection screen 1a on the portion of the selection screen 1a in the vicinity of the region, detected by the corresponding proximity sensor 6, of the portable telephone 100 held by the user and displays the selection keys in the changed size. Thus, the display portion 12 changes the size of the selection keys displayed on the selection screen 1a in the vicinity of the region of the portable telephone 100 held by the user in response to the contact size of a thumb or a finger of the user touching the selection screen 1a and displays the selection keys in the changed size, whereby the operability of the portable telephone 100 can be improved when the user selects the selection keys displayed on the selection screen 1a with the thumb of his/her left hand holding the portable telephone 100.

According to this embodiment, as hereinabove described, the main control portion 71 is formed to determine whether or not the layout of the selection screen 1a of the telephone body is suitable to the region held by the user when the corresponding proximity sensor 6 detects the region of the telephone body held by the user and to change the layout of the selection screen 1a to that suitable to the region, detected by the corresponding proximity sensor 6, held by the user if determining that the layout of the selection screen 1a of the telephone body is unsuitable to the region held by the user so that the layout of the selection screen 1a is changed in response to the state of the portable telephone 100 held by the user, whereby the operability of the portable telephone 100 can be further improved.

According to this embodiment, as hereinabove described, the main control portion 71 is formed to determine whether or not the layout of the selection screen 1a of the telephone body is suitable to the region held by the user when the corresponding proximity sensor 6 detects the region of the telephone body held by the user and not to change the layout of the selection screen 1a if determining that the layout of the selection screen 1a of the telephone body is suitable to the region held by the user, whereby the main control portion 71 can be prevented from changing the layout of the selection screen 1a if the same is suitable to the region held by the user.

According to this embodiment, as hereinabove described, the four proximity sensors 6 are provided on different positions, i.e., in the vicinity of both end portions of the telephone body in the longitudinal direction and in the vicinity of both end portions of the telephone body in the short-side direction, whereby the corresponding one of the proximity sensors 6 provided in the vicinity of both end portions of the telephone body in the longitudinal direction and in the vicinity of both end portions of the telephone body in the short-side direction can easily detect the region of the telephone body held by the user even if the user vertically or horizontally changes the direction of the telephone body.

According to this embodiment, as hereinabove described, the main control portion 71 is formed to detect the contact size every selecting operation of the user on the selection screen 1a and to control the display portion 12 to change the size of the selection keys displayed on the selection screen 1a in response to the detected contact size and to display the selection keys in the changed size, whereby the main control portion 71 can reliably control the display portion 12 to change the size of the selection keys displayed on the selection screen 1a in response to each contact size even if the user continuously selects various selection keys with different contact sizes.

Although the present invention has been described and illustrated in detail, it is clearly understood that the same is by way of illustration and example only and is not to be taken by way of limitation, the spirit and scope of the present invention being limited only by the terms of the appended claims.

For example, while the character input device according to the present invention is applied to the portable telephone in the aforementioned embodiment, the present invention is not restricted to this. The character input device according to the present invention may alternatively be applied to an MID (Mobile Internet Device), a DPF (Digital Photo Frame), a PND (Portable Navigation Device) or a remote control, for example.

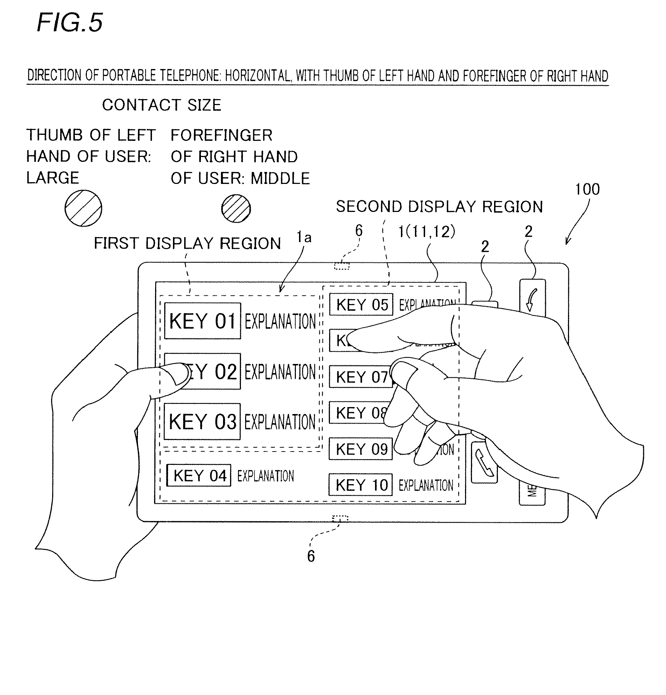

While the user selects the first and second display regions of the selection screen with the thumb of his/her left hand and the touch pen respectively in the aforementioned embodiment, the present invention is not restricted to this. The user may alternatively select first and second display regions of a selection screen with the thumb of his/her left hand and the forefinger of his/her right hand respectively as in a first modification of the embodiment shown in Fig. 5, for example. In this case, the second display region of the selection screen displays selection keys in a size responsive to a contact size (middle) of the forefinger of the right hand of the user touching the selection screen.

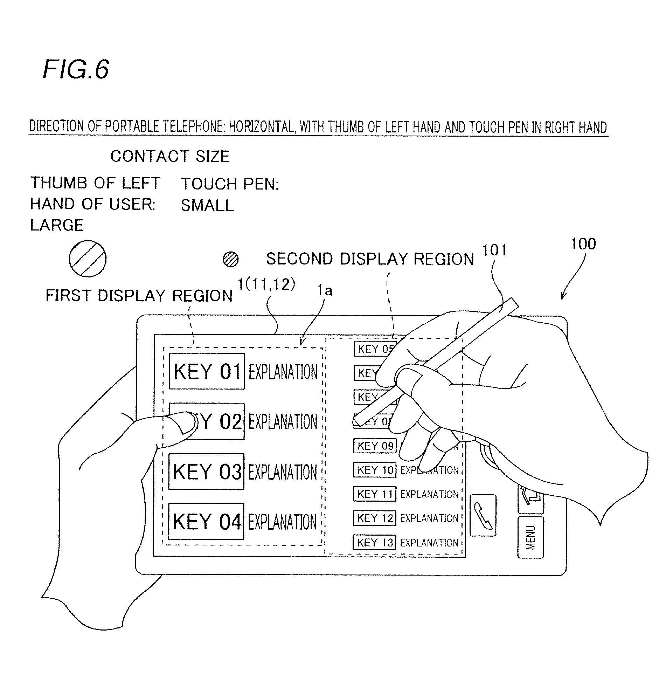

While the display portion changes the size of the selection keys displayed in the vicinity of the region of the portable telephone held by the user on the selection screen in response to the contact size of the thumb of the left hand of the user touching the selection screen and displays the selection keys in the changed size on the portion (first display region) of the selection screen in the vicinity of the region held by the user on the basis of the result detected by the corresponding proximity sensor in the aforementioned embodiment, the present invention is not restricted to this. A display portion may alternatively change the size of selection keys in response to a contact size of the thumb of the left hand of the user touching a selection screen to display the selection keys in the changed size in a portion of the selection screen on a side held by the user as in a second modification of the embodiment shown in Fig. 6, for example. In this case, the display portion changes the size of the selection keys and displays the selection keys in the changed size on the overall side of the selection screen held by the user, whereby the region held by the user may not be detected. Therefore, a portable telephone may not be provided with proximity sensors. If the portable telephone is provided with proximity sensors, the display portion may be so formed that the user can set whether to change the size of selection keys on a portion of the selection screen in the vicinity of the region of the portable telephone held by him/her and to display the selection keys in the changed size or to change the size of selection keys on the overall side, held by the user, of the portable telephone and to display the selection keys in the changed size on the selection screen.

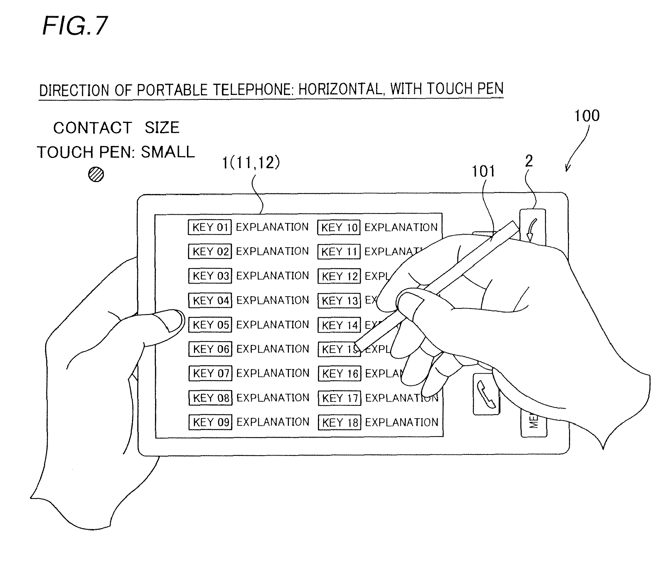

While the selection screen is divided into the first and second display regions for displaying the selection keys with different sizes in response to the contact sizes of a thumb or a finger of the user and the touch pen touching the respective regions of the selection screen in the aforementioned embodiment, the present invention is not restricted to this. A selection screen may not be divided into first and second display regions but may be provided with only one region so that a display portion reduces the size of selection keys displayed on the whole of a selection screen in response to a contact size of a touch pen touching the selection screen as in a third modification of the embodiment shown in Fig. 7, for example. In this case, a portable telephone may be provided with no proximity sensors.

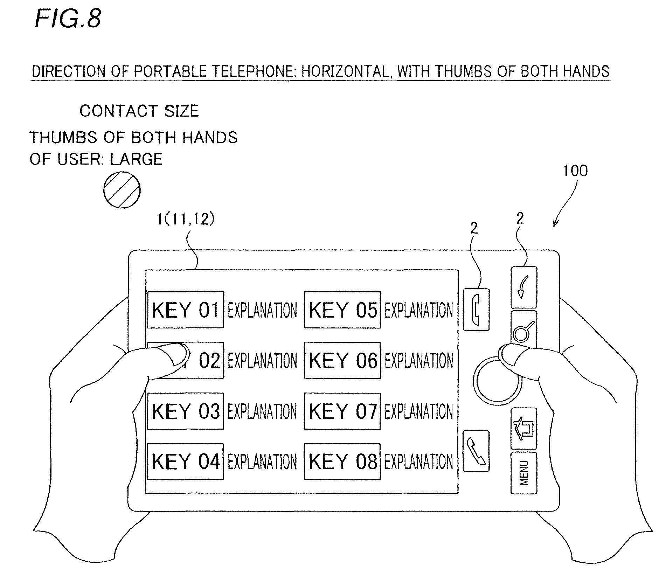

While the selection screen is divided into the first and second display regions and the display portion changes the sizes of the selection keys in response to the contact sizes of a thumb or a finger of the user and the touch pen touching the respective regions of the selection screen and displays the selection keys in the changed sizes in the aforementioned embodiment, the present invention is not restricted to this. A selection screen may not be divided into first and second display regions but may be provided with only one region so that a display portion increases the size of selection keys displayed on the whole of a selection screen in response to a contact size (large) of the thumbs of both hands of the user touching the selection screen as in a fourth modification of the embodiment shown in Fig. 8, for example. In this case, a portable telephone may be provided with no proximity sensors.

While the selection screen is divided into the two regions, i.e., the first and second display regions to display the selection keys of different sizes on the respective regions in the aforementioned embodiment, the present invention is not restricted to this. The selection screen may alternatively be provided with only one display region, or at least three display regions.

While the user holds the portable telephone with his/her left hand and performs the selecting operation on the selection screen with the touch pen in his/her right hand in the aforementioned embodiment, the present invention is not restricted to this. For example, the user may hold the portable telephone with his/her right hand to perform the selecting operation on the selection screen with the touch pen in his/her left hand, or may hold the portable telephone with his/her right hand to perform the selecting operation on the selection screen with the thumb or any finger of his/her left hand.

While the main control portion detects the contact size every time the user performs the selecting operation on the selection screen in the aforementioned embodiment, the present invention is not restricted to this. The main control portion may alternatively detect the contact size every time the user performs the selecting operation on the selection screen twice, for example.

While the acceleration sensor is applied as an example of the direction detection portion in the present invention in the aforementioned embodiment, the present invention is not restricted to this. A sensor other than the acceleration sensor may alternatively be applied so far as the same can detect the state of arrangement of the portable telephone in the vertical direction or the horizontal direction, for example.

While the proximity sensors are applied as examples of the holding detection portion in the present invention in the aforementioned embodiment, the present invention is not restricted to this. Sensors other than the proximity sensors may alternatively be applied so far as the same can detect the region of the portable telephone held by the user, for example.

## Claims

1. A character input device (100) comprising:
a display portion (12) displaying a selection screen (1a) displaying a plurality of selection keys;
a touch panel (11) sensing that a thumb or a finger of the user or a touch panel operation portion (101) has touched said selection screen displayed on said display portion and the coordinates of the touched position; and
a control portion (71) detecting a contact size of said thumb or said finger of the user or said touch panel operation portion touching said selection screen and controlling said display portion to change the size of said selection keys displayed on said selection screen in response to detected said contact size and to display said selection keys in said changed size when the user selects said selection keys displayed on said selection screen by touching said selection screen with said thumb or said finger or said touch panel operation portion.

2. The character input device according to claim 1,
wherein
said control portion is formed to control said display portion to display said selection keys displayed on said selection screen in a first size corresponding to a first contact size when detecting that said contact size of said thumb or said finger of the user or said touch panel operation portion touching said selection screen is said first contact size or to display said selection keys displayed on said selection screen in a second size, corresponding to a second contact size, smaller than said first size when detecting that said contact size of said thumb or said finger of the user or said touch panel operation portion touching said selection screen is said second contact size smaller than said first contact size.

3. The character input device according to claim 2,
wherein
said control portion is formed to control said display portion to display said selection keys displayed on said selection screen in a third size, corresponding to a third contact size, smaller than said first size and larger than said second size when detecting that said contact size of said thumb or said finger of the user or said touch panel operation portion touching said selection screen is said third contact size smaller than said first contact size and larger than said second contact size.

4. The character input device according to claim 3,
wherein
said control portion controls said display portion to display said selection keys in any size, corresponding to either said thumb or said finger of the user or said touch panel operation portion selecting said selection keys, among said first size, said second size and said third size when the user selects said selection keys with either said thumb or said finger or said touch panel operation portion or to display said selection keys in any two sizes, corresponding to both of said thumb or said finger of the user and said touch panel operation portion selecting said selection keys, among said first size, said second size and said third size when the user selects said selection keys with both of a thumb or a finger and said touch panel operation portion.

5. The character input device according to claim 1,
wherein
said control portion is formed to control said display portion to maintain the state of changing the size of said selection keys displayed on said selection screen in response to said contact size of said thumb or said finger of the user or said touch panel operation portion touching said selection screen also in a state where the user separates said thumb or said finger or said touch panel operation portion from said selection screen after selecting said selection keys displayed on said selection screen by touching said selection screen with said thumb or said finger or said touch panel operation portion.

6. The character input device according to claim 5,
wherein
said control portion is formed to control said display portion to maintain the state of changing the size of said selection keys displayed on said selection screen in response to said contact size of said thumb or said finger of the user or said touch panel operation portion touching said selection screen until the user selects said selection keys displayed on said selection screen after selecting said selection keys displayed on said selection screen.

7. The character input device according to clam 1,
wherein
said selection screen includes a first display region and a second display region displaying said plurality of selection keys, and
said control portion is so formed, when said contact size of said thumb or said finger of the user or said touch panel operation portion touching said first display region and said contact size of said thumb or said finger of the user or said touch panel operation portion touching said second display region are different from each other, as to control said display portion to display said selection keys displayed on said first display region and said selection keys displayed on said second display region in different sizes to correspond to said contact sizes of said thumb or said finger of the user or said touch panel operation portion touching said first and second display regions respectively.

8. The character input device according to claim 7, so formed that said first display region is arranged on a first side of a device body held by the user on said selection screen and said second display region is arranged on a second side of said device body opposite to said first side held by the user on said selection screen.

9. The character input device according to claim 1, further comprising a direction detection portion (5) detecting the state of arrangement of said display portion in the vertical direction or the horizontal direction, wherein
said control portion is formed to control said display portion to change the size of said selection keys displayed on said selection screen in response to said contact size of said thumb or said finger of the user or said touch panel operation portion touching said selection screen to correspond to the state of arrangement of said display portion in the vertical direction or the horizontal direction on the basis of the state of arrangement of said display portion in the vertical direction or the horizontal direction detected by said direction detection portion.

10. The character input device according to claim 9,
wherein
said control portion is formed to control said display portion to display said selection keys vertically along the longitudinal direction of said selection screen when said display portion is arranged in the vertical direction or to control said display portion to display said selection keys vertically along the short-side direction of said selection screen when said display portion is arranged in the horizontal direction.

11. The character input device according to claim 1, further comprising a holding detection portion (6) detecting a region of a device body held by the user, wherein
said control portion is formed to control said display portion to change the size of said selection keys displayed in the vicinity of said region of said device body held by the user on said selection screen in response to said contact size of a thumb or a finger of the user holding said device body and touching said selection screen and to display said selection keys in said changed size in a portion of said selection screen in the vicinity of said region of said device body held by the user and detected by said holding detection portion.

12. The character input device according to claim 1, further comprising a holding detection portion detecting a region of a device body held by the user, wherein
said control portion is formed to determine whether or not the layout of said selection screen of said device body is suitable to said region held by the user when said holding detection portion detects said region of said device body held by the user and to change the layout of said selection screen to a layout suitable to said region held by the user and detected by said holding detection portion when determining that the layout of said selection screen of said device body is unsuitable to said region held by the user.

13. The character input device according to claim 12,
wherein
said control portion determines whether or not the layout of said selection screen of said device body is suitable to said region held by the user when said holding detection portion detects said region of said device body held by the user and does not change the layout of said selection screen when determining that the layout of said selection screen of said device body is suitable to said region held by the user.

14. The character input device according to claim 11,
wherein
a plurality of said holding detection portions are provided on different positions of said device body, and provided at least in the vicinity of an end portion of said device body on the side of the longitudinal direction and in the vicinity of an end portion on the side of the short-side direction.

15. The character input device according to claim 1,
wherein
said control portion is formed to detect said contact size every selecting operation of the user on said selection screen and to control said display portion to change the size of said selection keys displayed on said selection screen in response to detected said contact size and to display said selection keys in said changed size.
